# EUROPEAN PATENT APPLICATION

(11) **EP 4 475 217 A1**
(43) Date of publication of application: **11.12.2024**
(21) Application number: 23746867.3
(22) Date of filing: 20.01.2023
(51) Int. Cl.: H01M 4/139, H01G 11/06, H01G 11/24, H01M 4/02, H01M 4/04, H01M 4/13, H01M 4/62

(54) **COMPOSITE PARTICLES FOR ELECTROCHEMICAL ELEMENT POSITIVE ELECTRODE, PRODUCTION METHOD FOR SAME, POSITIVE ELECTRODE FOR ELECTROCHEMICAL ELEMENT, AND ELECTROCHEMICAL ELEMENT**

(30) Priority: 31.01.2022 JP 2022013717
(71) Applicant: Zeon Corporation, Tokyo 100-8246 (JP)
(72) Inventor: HAYASAKA, Kentaro, Tokyo 100-8246 (JP)
(74) Representative: Maiwald GmbH
(86) International application number: PCT/JP2023/001781
(87) International publication number: WO 2023/145655

(57) **Abstract**

Provided are composite particles for an electrochemical device positive electrode that are capable of allowing an electrochemical device to exert good electrochemical characteristics. The composite particles include a positive electrode active material, a carbon-based conductive material, and a binder resin, wherein the ratio of the amount of carbon atoms of the center region to the amount of carbon atoms of the outer region (the amount of carbon atoms of the center region/the amount of carbon atoms of the outer region) in the composite particle is 0.3 or more and 1.0 or less.

## Description

### TECHNICAL FIELD

The present disclosure relates to composite particles for an electrochemical device positive electrode, a method for producing the same, an electrochemical device positive electrode, and an electrochemical device.

### BACKGROUND

Electrochemical devices such as lithium ion secondary batteries, electric double layer capacitors, and lithium ion capacitors are rapidly expanding in demand for their small size, light weight, high energy density, and capability of repeated charging and discharging cycles. Consequently, studies have been made to improve battery members such as electrodes for the purpose of achieving even higher electrochemical device performance.

An electrode used in an electrochemical device such as a lithium ion generally includes a current collector and an electrode mixed material layer formed on the current collector. The electrode mixed material layer is formed for example by applying a slurry composition, prepared by dispersing in a solvent an electrode active material, a conductive material, and a binder resin that serves to bind the electrode active material and the like, onto a current collector and drying the slurry composition.

Recent proposed methods for forming an electrode mixed material layer involve spray-drying a slurry that contains an electrode active material, a conductive material, a binder resin and other components to form composite particles for an electrochemical device electrode (hereinafter, also simply referred to as "composite particles") and forming the composite particles into a sheet. For example, PTL 1 discloses obtaining composite particles by spray-drying a slurry containing an electrode active material, a binder resin, and a dispersion medium, and pressing the composite particles to form an electrode active material layer as an electrode mixed material layer.

### CITATION LIST

### Patent Literature

PTL 1: JP2015-026432A

### SUMMARY

### (Technical Problem)

The present inventor established that in composite particles obtained by spray-drying a slurry composition containing an electrode active material, a conductive material, a binder resin and the like, the binder resin and other components present inside the composite particle may be localized on the surface side (outside) of the particle due to their migration. The present inventor also established that when composite particles are produced using a positive electrode active material as an electrode active material and using a conductive material made of carbon material (carbon-based conductive material), the carbon-based conductive material migrates toward the particle surface side to reduce the number of conductive paths among the positive electrode active materials in the vicinity of the center of the composite particle, thus deteriorating the electrochemical characteristics of the electrochemical device to be obtained.

As such, there is room for improving the conventional composite particles for an electrochemical device positive electrode in terms of imparting good electrochemical characteristics to electrochemical devices.

An object of the present disclosure is therefore to provide composite particles for an electrochemical device positive electrode that are capable of allowing an electrochemical device to exert good electrochemical characteristics, and a method for producing the same.

Another object of the present disclosure is to provide an electrochemical device positive electrode capable of allowing an electrochemical device to exert good electrochemical characteristics, and an electrochemical device having good electrochemical characteristics.

### (Solution to Problem)

The present inventor conducted diligent investigation with the aim of solving the problem set forth above. The present inventor has established that the electrochemical characteristics of an electrochemical device can be enhanced by using composite particles for an electrochemical device positive electrode that are obtained by spray-drying a slurry composition containing a positive electrode active material, a carbon-based conductive material, and a binder resin, wherein the ratio of the amount of carbon atoms of the center region to the amount of carbon atoms of the outer region in the composite particle falls within a predetermined range. The present inventor has also established that composite particles in which the ratio of the amount of carbon atoms of the center region to the amount of carbon atoms of the outer region in the composite particle falls within a predetermined range exhibit good moldability and hence can impart a good appearance to the electrochemical device to be obtained. The present disclosure has been made based on the foregoing findings.

That is, the present disclosure is aimed at advantageously solving the problem set forth above, and the present disclosure is directed to [1] composite particles for an electrochemical device positive electrode, comprising a positive electrode active material, a carbon-based conductive material, and a binder resin, wherein a ratio of an amount of carbon atoms of a center region to an amount of carbon atoms of an outer region (amount of carbon atoms of center region / amount of carbon atoms of outer region) in the composite particle as measured in accordance with the following measurement method is 0.3 or more and 1.0 or less:

### [Measurement method]

(1) In a cross-sectional image of a composite particle, the center of a square whose one side is 15 µm is aligned with the center of a cross-section of the composite particle; the square is divided into 9 regions whose one side is 5 µm; an amount of carbon atoms in each region is measured; and an average value thereof is defined as the amount of carbon atoms in the center region;
(2) in the cross-sectional image of the composite particle, the center of a square whose one side is 15 µm is aligned with the center of the cross-section of the composite particle; the square is moved from the center in each of the four directions of right, up, left and down of the cross-sectional image until the square contacts an outer edge of the cross-section of the composite particle; each square is divided into three regions each having a size of 15 µm × 5 µm to produce a total of 12 regions; an amount of carbon atoms of each region is measured; and an average value thereof is defined as the amount of carbon atoms of the outer region; and
(3) the amount of carbon atoms of the center region is divided by the amount of carbon atoms of the outer region.

When the ratio of the amount of carbon atoms of the center region to the amount of carbon atoms of the outer region falls within a predetermined range in the composite particle as described above, the electrochemical device to be obtained can exert good electrochemical characteristics. Further, composite particles for an electrochemical device positive electrode in which the ratio of the amount of carbon atoms of the center region to the amount of carbon atoms of the outer region falls within a predetermined range exhibit good moldability.

[2] In the composite particles for an electrochemical device positive electrode according to [1], it is preferred that the particle size distribution of the carbon-based conductive material has a plurality of peaks. When the particle size distribution of the carbon-based conductive material has a plurality of peaks as described above, it is possible to allow an electrochemical device to exert better electrochemical characteristics while enhancing the moldability of the composite particles.

In the present disclosure, the particle size distribution of the carbon-based conductive material can be measured by the method described in the Examples.

Further, the present disclosure is aimed at advantageously solving the problem set forth above, and the present disclosure is directed to [3] a method for producing the composite particles for an electrochemical device positive electrode according to [1] or [2] above, the method comprising spray-drying a slurry composition containing a positive electrode active material, a carbon-based conductive material, a binder resin, and a solvent.

By spray-drying a slurry composition containing a positive electrode active material, a carbon-based conductive material, a binder resin, and a solvent as described above, it is possible to obtain composite particles for an electrochemical device positive electrode that exhibit good moldability as well as can allow an electrochemical device to exert good electrochemical characteristics.

[4] In the method for producing the composite particles for an electrochemical device positive electrode according to [3] above, it is preferred that the slurry composition has a viscosity of 50 mP·s or more. When the viscosity of the slurry composition is 50 mP's or more, migration of the carbon-based conductive material toward the particle surface side in the obtained composite particles can be suppressed satisfactorily.

In the present disclosure, the viscosity of the slurry composition can be measured by the method described in the Examples.

Further, the present disclosure is aimed at advantageously solving the problem set forth above, and the present disclosure is directed to [5] an electrochemical device positive electrode comprising a current collector, and a positive electrode mixed material layer formed on the current collector, wherein the positive electrode mixed material layer is formed using the composite particles for an electrochemical device positive electrode according to above [1] or [2]. Because the presently disclosed the electrochemical device positive electrode is formed using the above-described composite particles for an electrochemical device positive electrode that exhibit good moldability as well as can enhance the electrochemical characteristics of the electrochemical device to be manufactured as described above, the electrochemical device positive electrode has good appearance and can allow an electrochemical device to exert good electrochemical characteristics.

Further, the present disclosure is aimed at advantageously solving the problem set forth above, and the present disclosure is directed to [6] an electrochemical device comprising an electrochemical device positive electrode according to [5] above. Because the presently disclosed electrochemical device includes the above-described electrochemical device positive electrode capable of allowing an electrochemical device to exert good electrochemical characteristics, the electrochemical device has good electrochemical characteristics.

### (Advantageous Effect)

According to the present disclosure, it is possible to provide composite particles for an electrochemical device positive electrode that are capable of allowing an electrochemical device to exert good electrochemical characteristics, and a method for producing the same.

Further, according to the present disclosure, it is possible to provide an electrochemical device positive electrode capable of allowing an electrochemical device to exert good electrochemical characteristics, and an electrochemical device having good electrochemical characteristics.

### DETAILED DESCRIPTION

The following provides a detailed description of an embodiment of the present disclosure.

The presently disclosed composite particles for an electrochemical device positive electrode can be suitably produced by the presently disclosed method for producing composite particles for an electrochemical device positive electrode. The presently disclosed electrochemical device positive electrode is formed using the presently disclosed composite particles for an electrochemical device positive electrode. Further, the presently disclosed electrochemical device is an electrochemical device that includes the presently disclosed electrochemical device positive electrode.

### (Composite particles for electrochemical device positive electrode)

The presently disclosed composite particles for an electrochemical device positive electrode (hereinafter, also simply referred to as "composite particles") include a positive electrode active material, a carbon-based conductive material, and a binder resin, and may optionally further include other components such as dispersants and thickeners. The presently disclosed composite particles are characterized in that the ratio of the amount of carbon atoms of the center region to the amount of carbon atoms of the outer region (the amount of carbon atoms of the center region/the amount of carbon atoms of the outer region) as measured in accordance with the following measurement method is 0.3 or more 1.0 or less:

### [Measurement method]

(1) In a cross-sectional image of a composite particle, the center of a square whose one side is 15 µm is aligned with the center of a cross-section of the composite particle; the square is divided into 9 regions whose one side is 5 µm; an amount of carbon atoms in each region is measured; and an average value thereof is defined as the amount of carbon atoms in the center region;
(2) in the cross-sectional image of the composite particle, the center of a square whose one side is 15 µm is aligned with the center of the cross-section of the composite particle; the square is moved from the center in each of the four directions of right, up, left and down of the cross-sectional image until the square contacts an outer edge of the cross-section of the composite particle; each square is divided into three regions each having a size of 15 µm × 5 µm to produce a total of 12 regions; an amount of carbon atoms of each region is measured; and an average value thereof is defined as the amount of carbon atoms of the outer region; and
(3) the amount of carbon atoms of the center region is divided by the amount of carbon atoms of the outer region.

Any method can be used to obtain a cross-section of a composite particle to be observed. For example, ion milling can be used. A cross-sectional image of the composite particle can be obtained by any method, e.g., by scanning electron-microscopy (SEM). Further, the amount of carbon atoms can be measured any method, e.g., by energy dispersive X-ray spectroscopy (EDX). Measurements can be suitably made using, for example, an SEM/EDX analyzer, a device capable of performing elemental analysis of the target region while performing SEM observation. Measurements are usually performed on a composite particle having a particle diameter (maximum diameter) of 15 µm or more and 500 µm or less in a cross-sectional image of the composite particle. Further, in the step (2) above, the dividing direction of each square may be vertical (i.e., the square may be divided into three vertical divisions) or horizontal (i.e., the square may be divided into three horizontal divisions).

The presently disclosed composite particles can allow an electrochemical device to exert good electrochemical characteristics with the ratio of the amount of carbon atoms of the center region to the amount of carbon atoms of the outer region falling within the predetermined range. The underlying mechanism of this is not necessarily clear, but a presumed mechanism is as discussed below.

That is, in a composite particle in which the ratio of the amount of carbon atoms of the center region to the amount of carbon atoms of the outer region falls within the predetermined range, the carbon-based conductive material is not excessively localized, so that conductive paths are secured in the entire region of the particle and as such the electrochemical characteristics of the electrochemical device to be obtained improve.

Further, while the mechanism by which a composite particle in which the ratio of the amount of carbon atoms of the center region to the amount of carbon atoms of the outer region falls within the predetermined range exhibits good moldability is not necessarily clear, it is presumed that the binder resin in such a composite particle is migrated to the particle surface side and as such moldability improves.

From the viewpoint of further enhancing moldability and allowing an electrochemical device to exert better electrochemical characteristics, the ratio of the amount of carbon atoms of the center region to the amount of carbon atoms of the outer region is preferably 0.4 or more, more preferably 0.65 or more, still more preferably 0.7 or more, particularly preferably 0.8 or more, and preferably 0.99 or less.

The ratio of the amount of carbon atoms of the center region to the amount of carbon atoms of the outer region of the composite particles can be controlled for example by adjusting the type of the carbon-based conductive material used, the particle size distribution of the carbon-based conductive material, the viscosity of the slurry composition described later, and/or the like.

### <Positive electrode active material>

Examples of the positive electrode active material include, but not limited to, known positive electrode active materials used in electrochemical devices. Specific examples of positive electrode active materials that can be used in the positive electrode mixed material layer of a lithium ion secondary battery, an example of an electrochemical device, include, but not limited to, compounds containing a transition metal, e.g., transition metal oxides, transition metal sulfides, and composite metal oxides of lithium and transition metals. Examples of transition metals include Ti, V, Cr, Mn, Fe, Co, Ni, Cu, and Mo.

Specific examples of positive electrode active materials include, but not limited to, lithium-containing cobalt oxide (LiCoO₂), lithium manganate (LiMn₂O₄), lithium-containing nickel oxide (LiNiO₂), lithium-containing composite oxides of Co-Ni-Mn, lithium-containing composite oxides of Ni-Mn-Al, lithium-containing composite oxides of Ni-Co-Al, olivine-type lithium iron phosphate (LiFePO₄), olivine-type lithium manganese phosphate (LiMnPO₄), lithium-excess spinel compound represented by the formula Li₁₊ₓMn₂₋ₓO₄ (where 0<X<2), Li[Ni_{0.17}Li_{0.2}Co_{0.07}Mn_{0.56}]O₂, and LiNi_{0.5}Mn_{1.5}O₄.

Preferred is olivine-type lithium-iron phosphate (LiFePO₄) from the viewpoint of further improving the electrochemical characteristics of the electrochemical device.

The positive electrode active materials described above may be used singly or in combination of two or more types.

### <Carbon-based conductive material>

The carbon-based conductive material is a carbon material that can secure an electrical contact between the positive electrode active materials in the positive electrode mixed material layer. Examples of carbon-based conductive materials include, but not limited to, carbon blacks such as furnace black, acetylene black, and Ketjen Black^{®} (Ketjen Black is a registered trademark in Japan, other countries, or both); graphites such as natural graphite and artificial graphite; polyacrylonitrile-based carbon fibers, pitch-based carbon fibers, VGCF (vapor grown carbon fiber), carbon nanotubes (hereinafter also simply referred to as "CNTs"), and graphene. These carbon-based conductive materials may be used singly or in combination of two or more types.

From the viewpoint of allowing an electrochemical device to exert better electrochemical characteristics, the carbon-based conductive material preferably includes two or more types of the carbon-based conductive materials. The two or more types of the carbon-based conductive materials are preferably a combination of two types of carbon black or a combination of CNTs and carbon black, with a combination of CNTs and carbon black being more preferred.

CNTs may be single-walled carbon nanotubes or multi-walled carbon nanotubes. CNTs are preferably multi-walled carbon nanotubes. Single-walled CNTs and multi-walled CNTs may be combined for use as the CNTs. The use of multi-walled CNTs makes it possible to further limit increases in the internal resistance of the electrochemical device after cycling while improving the dispersibility of CNTs in a dispersion liquid.

CNTs preferably have a BET specific surface area of 100 m²/g or more, more preferably 150 m²/g or more, and preferably have a BET specific surface area of 1,000 m²/g or less, more preferably 500 m²/g or less. When the BET specific surface area of CNTs falls within the above-described range, the electrochemical characteristics of the electrochemical device to be obtained can be further improved.

As used herein, "BET specific surface area" means the nitrogenadsorption specific surface area measured by the BET method.

CNTs are not particularly limited and those synthesized using any known CNT synthesis method such as, for example, arc discharging, laser ablation, or chemical vapor deposition (CVD) can be used.

The mass ratio of CNTs to carbon black (CNTs/carbon black) in the composite particle is preferably 0.01 or more, more preferably 0.05 or more, and is preferably 100 or less, more preferably 50 or less. When the mass ratio of CNTs to carbon black falls within the above range, it is possible to allow an electrochemical device to exert better electrochemical characteristics while further improving the moldability of the composite particles.

### [Particle size distribution]

The carbon-based conductive material preferably has a plurality of peaks in the particle size distribution. That is, the particle size distribution is preferably multimodal. When the particle size distribution has a plurality of peaks, it is possible to allow an electrochemical device to exert better electrochemical characteristics while further improving the moldability of the composite particles. The particle size distribution of the carbon-based conductive material may have two peaks or may have three or more peaks.

When the particle size distribution has two or more peaks, from the viewpoint of allowing an electrochemical device to exert better electrochemical characteristics while further improving the moldability of the composite particles, the particle diameter at the peak that appears first from smaller diameters in the particle size distribution (hereinafter, also referred to as "first particle diameter D1") is preferably 0.05 µm or more, more preferably 0.5 µm or more, and preferably 1 µm or less, more preferably 0.9 µm or less. For the same reason, in the particle size distribution, the particle diameter at the peak that appears second from smaller diameters (hereinafter, also referred to as "second particle diameter D2") is preferably greater than 1 µm, more preferably 4 µm or more, still more preferably 6.5 µm or more, and preferably 40 µm or less, more preferably 20 µm or less.

The number of peaks, the first particle diameter D1 and the second particle diameter D2 in the particle size distribution can be controlled for example by appropriately changing the type and/or the amount of the carbon-based conductive material used, the type and/or the amount of a dispersant that may be used for preparing the carbon-based conductive material dispersion to be described later, and/or the dispersing conditions.

### [Content of carbon-based conductive material]

The content of the carbon-based conductive material in the presently disclosed composite particles is preferably 0.1 parts by mass or more, more preferably 0.5 parts by mass or more, and preferably 10 parts by mass or less, more preferably 5 parts by mass or less, with respect to 100 parts by mass of the positive electrode active material. When the content of the carbon-based conductive material falls within the above range, increases in the electrical resistance of the electrochemical device positive electrode to be obtained can be limited, allowing an electrochemical device to exert better electrochemical characteristics.

### <Binder resin>

The binder resin is a component that functions as a binder that binds the positive electrode mixed material layer to the current collector and also can prevent components such as the positive electrode active material and the carbon-based conductive material from being detached from the positive electrode mixed material layer. The shape of the binder resin is not particularly limited and may be particulate.

The binder resin is not particularly limited. For example, a polymer containing an acidic group-containing monomer unit, a (meth)acrylic acid ester monomer unit, and a nitrile group-containing monomer unit can be used. It is preferred to use an acrylic polymer containing a (meth)acrylate monomer unit.

As used herein, the term "(meth)acryl" is used to indicate "acryl" and/or "methacryl."

### [Acidic group-containing monomer unit]

Examples of acidic group-containing monomers that may form the acidic group-containing monomer unit include monomers having a carboxylic acid group, monomers having a sulfo group, and monomers having a phosphate group. Examples of monomers having a carboxylic acid group, examples of monomers having a sulfo group, and examples of monomers having a phosphate group include those described in JP2017-069108A. Preferred are monomers having a carboxylic acid group, with methacrylic acid being more preferred. Acidic group-containing monomers may be used singly or in combination of two or more types.

The proportion of the acidic group-containing monomer unit is preferably 0.1% by mass or more, more preferably 0.5% by mass or more, still more preferably 0.8% by mass or more, and preferably 30% by mass or less, more preferably 20% by mass or less, still more preferably 10% by mass or less, when the amount of all the repeating units included in the polymer is taken as 100% by mass.

### [(Meth)acrylic acid ester monomer unit]

Examples of (meth)acrylic acid ester monomers that may form the (meth)acrylic acid ester monomer unit include those described in JP2017-050112A. Of these (meth)acrylic acid ester monomers, 2-ethylhexyl acrylate is preferred. (Meth)acrylic acid ester monomers may be used singly or in combination of two or more types.

The proportion of the (meth)acrylic acid ester monomer unit is preferably 50% by mass or more, more preferably 55% by mass or more, still more preferably 58% by mass or more, and preferably 98% by mass or less, more preferably 97% by mass or less, still more preferably 96% by mass or less, when the amount of all the repeating units included in the polymer is taken as 100% by mass.

### [Nitrile group-containing monomer unit]

Examples of nitrile-group containing monomers that may form the nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples thereof include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these α,β-unsaturated nitrile monomers, acrylonitrile is preferred. Nitrile-group containing monomers may be used singly or in combination of two or more types.

The proportion of the nitrile group-containing monomer unit is preferably 1% by mass or more, more preferably 2% by mass or more, still more preferably 5% by mass or more, and preferably 90% by mass or less, more preferably 80% by mass or less, still more preferably 70% by mass or less, when the amount of all the repeating units included in the polymer is taken as 100% by mass.

### [Average particle diameter]

When the binder resin is particulate, the average particle diameter of the binder resin is preferably 0.05 µm or more, more preferably 0.08 µm or more, still more preferably 0.23 µm or more, and preferably 5 µm or less, more preferably 10 µm or less, from the viewpoint of further improving moldability by facilitating migration of the binder resin to the surface side of the composite particle.

The average particle diameter of the binder resin means particle diameter D50 where a cumulative volume as calculated from smaller diameters by the laser diffraction method becomes 50% and can be measured by the method described in the Examples.

### [Content of binder resin]

The content of the binder resin in the presently disclosed composite particles is preferably 0.2 parts by mass or more, more preferably 0.5 parts by mass or more, and preferably 10 parts by mass or less, more preferably 5 parts by mass or less, with respect to 100 parts by mass of the positive electrode active material. When the content of the binder resins falls within the above range, it is possible to allow an electrochemical device to exert better electrochemical characteristics.

### [Mass ratio of binder resin to carbon-based conductive material]

The mass ratio of the binder resin to the carbon-based conductive material (binder resin/carbon-based conductive material) is preferably 0.2 or more, more preferably 0.5 or more, and preferably 5 or less, more preferably 3 or less.

In addition, from the viewpoint of moldability of the composite particles, it is preferred that the binder resin is more abundant in the outer portion (outside the center portion) than in the center portion of the composite particle, where the center portion refers to an area from the center of the particle to 50% of the radius of the particle.

### [Production method]

Methods for producing a polymer as the binder resin are not particularly limited. A polymer can be obtained for example by polymerizing a monomer composition containing the above-described monomer(s). The proportion of each monomer in the monomer composition used for polymer production can be determined in accordance with the proportions of the corresponding repeating units in the polymer to be obtained.

The polymerization method is not specifically limited, and any of solution polymerization, suspension polymerization, bulk polymerization, and emulsion polymerization may be used. Moreover, ion polymerization, radical polymerization, living radical polymerization or the like may be used as the polymerization reaction.

### <Other components>

Other components include thickeners and dispersants that may be used in the preparation of the slurry composition described below.

The proportion of other components in the presently disclosed composite particles is preferably 0.5 parts by mass or more, more preferably 1 part by mass or more, and preferably 10 parts by mass or less, more preferably 5 parts by mass or less, with respect to 100 parts by mass of the positive electrode active material.

The proportion of other components in the presently disclosed composite particles is preferably 0.01 parts by mass or more, more preferably 0.5 parts by mass or more, and preferably 5 parts by mass or less, more preferably 3 parts by mass or less, with respect to 100 parts by mass of the total of the carbon-based conductive material and the binder resin.

### <Average particle diameter>

The presently disclosed composite particles preferably have an average particle diameter of 5 µm or more, more preferably 15 µm or more, still more preferably 20 µm or more, even more preferably 55 µm or more, particularly preferably 65 µm or more, and preferably 500 µm or less, more preferably 300 µm or less, still more preferably 200 µm or less. When the average particle diameter of the composite particles falls within the above range, the composite particles have good fluidity, so that powder supply at the time of molding is facilitated.

In the present disclosure, the average particle diameter of the composite particles can be measured by the method described in the Examples.

### <Volume resistivity>

The volume resistivity of the presently disclosed composite particles is preferably 30 Ω·cm or less, more preferably 20 Ω·cm or less. The lower limit of the volume resistivity of the composite particles is not particularly limited. However, the volume resistivity of the composite particles may be 1 Ω·cm or more, for example. When the volume resistivity of the composite particles is equal to or lower than the upper limit value, the electrochemical characteristics of the electrochemical device to be obtained can be enhanced.

The volume resistivity of the composite particles is found as follows: A pellet of the composite particles is formed by press-forming such that the pellet has a diameter of 25.4 mm and a density of 3.2 g/cm². The electric resistance of the pellet is measured using a digital LCR meter, and the measured electric resistance value is converted into volume resistivity (Ω·cm).

### <Angle of repose>

The angle of repose of the presently disclosed composite particles is preferably 45 degrees or less, more preferably 40 degrees or less. When the angle of repose is equal to or less than the above upper limit value, the composite particles have good fluidity and thus moldability can be further enhanced.

The angle of repose refers to the angle of the ridgeline of a powder cone after the powder particles freely fall onto a horizontal plane and means the value (°) measured by the method defined in "Alumina powder-part 2: Determination of physical properties-2: Angle of repose" of JIS R9301-2-2. Specific examples of measuring devices that can be used herein include powder characteristics analyzers such as powder tester PT-X (manufactured by Hosokawa Micron Corporation).

### <HS circularity>

The HS circularity of the presently disclosed composite particles is preferably 0.80 or more and is preferably 0.90 or less. When the HS circularity of the composite particles is equal to or higher than the lower limit value, cracking of the positive electrode active material in the positive electrode formed using the composite particles can be limited. In addition, when the HS circularity of the composite particles is equal to or less than the upper limit value, the rate characteristics of the electrochemical device to be obtained can be enhanced.

The HS circularity of the composite particles is found as follows: images of 4,000 composite particles are binarized and analyzed in accordance with the image analysis method according to JIS Z 8827-1. For the analyzed 4,000 particles, HS circularity is calculated using the equation: 4πA/P2 (where A is projected area and P is perimeter length) and then an average value is calculated.

### <Convexity>

The convexity of the presently disclosed composite particles is preferably 0.5 or more and preferably 0.97 or less. When the convexity of the composite particle is equal to or less than the upper limit value, the cycle characteristics of the electrochemical device to be obtained can be enhanced.

The convexity of the composite particles is found as follows: images of 4,000 composite particles are binarized and analyzed in accordance with the image analysis method according to JIS Z 8827-1. For all the particles in the observed field of view, the perimeter length of the convex-shaed circumscribed figure (minimum convex hull) is divided by the perimeter length P and then an average value is calculated.

### <Bulk density>

The bulk density of the composite particles is preferably 0.3 g/cm³ or more and 3.5 g/cm³ or less. When the bulk density is equal to or higher than the lower limit, cracking of the positive electrode active material in the positive electrode formed using the composite particles can be limited. In addition, when the bulk density is equal to or less than the upper limit value, the flexibility of the positive electrode to be obtained can be enhanced.

The bulk density of the composite particles can be measured based on the constant volume measurement method described in JIS R 1628-1997.

### <Density coefficient>

The density coefficient of the presently disclosed composite particles is preferably 1.3 or more and 3.5 or less. When the density coefficient is equal to or higher than the lower limit, the flexibility of the positive electrode to be obtained and the cycle characteristics of the electrochemical device that includes the positive electrode can be improved. When the density coefficient is equal to or less than the above upper limit value, it is possible to favorably reduce the occurrence of cracking of the positive electrode active material in the positive electrode to be obtained.

Density coefficient can be obtained by dividing compression density by bulk density. Here, compressive density can be obtained by pressing 4.00 g of the composite particles at a pressure of a 50MPa to form a cylindrical pellet having a bottom area of 2 cm² (diameter: 15.97 mm) and measuring the thickness of the pellet.

### (Method for producing composite particles for electrochemical device positive electrode)

The presently disclosed method for producing the composite particles for an electrochemical device positive electrode includes spray-drying a slurry composition containing a positive electrode active material, a carbon-based conductive material, a binder resin, and a solvent (spray-drying step), and optionally further include other step(s) such as classifying the obtained composite particles (classifying step). Each step will be described below.

### <Spray-drying step>

In the spraying step, the slurry composition is spray-dried to produce composite particles. Spray drying is a method in which the slurry composition is sprayed and dried in hot air to obtain a granulated product.

Devices used for spraying the slurry composition are not particularly limited. Examples thereof include atomizers. Examples of atomizers include rotary disc atomizers, cup atomizers, two-fluid nozzle atomizers, and pressure atomizers.

The hot air temperature during spray-drying is preferably 25°C to 250°C, more preferably 50°C to 220°C, still more preferably 80°C to 200°C. In the spray drying method, the mode in which hot air is blown is not particularly limited and examples include a mode in which hot air and sprayed droplets are in parallel flow in a lateral direction; a mode in which the slurry composition is sprayed at the top of the drying tower and descends together with hot air; a mode in which sprayed droplets and hot air are in counter flow and brought in contact with each other; and a mode in which sprayed droplets and hot air are initially in parallel flow and then the sprayed droplets fall by the gravity to be in contact with hot air in counter flow.

The temperature of the slurry composition to be sprayed is not limited and may be room temperature. Alternatively, the slurry composition may be warmed to a temperature higher than room temperature.

Spray-drying can be performed using any spray dryer known in the art.

### [Slurry composition]

The slurry composition includes a positive electrode active material, a carbon-based conductive material, a binder resin, and a solvent, and may optionally further include other components such as dispersants and thickeners.

As the positive electrode active material, the carbon-based conductive material, and the binder resin, those described above in the section "Composite particles for electrochemical device positive electrode" can be used.

### -Solvent-

The solvent used in the slurry composition is not particularly limited, and any of water and organic solvents can be used. Examples of organic solvents include acetonitrile, N-methyl-2-pyrrolidone, tetrahydrofuran, acetone, acetylpyridine, cyclopentanone, dimethylformamide, dimethyl sulfoxide, methylformamide, methyl ethyl ketone, furfural, ethylenediamine, dimethylbenzene (xylene), methylbenzene (toluene), cyclopentyl methyl ether, and isopropyl alcohol. Of such solvents, water is preferred.

These solvents may be used singly or in a mixture of two or more thereof at any mixing ratio.

### -Thickener -

Examples of thickeners include cellulose polymers such as carboxymethylcellulose, methylcellulose and hydroxypropylcellulose, and ammonium salts and alkali metal salts thereof, (modified) poly(meth)acrylic acid and ammonium salts and alkali metal salts thereof, polyvinyl alcohols such as (modified) polyvinyl alcohol, copolymers of acrylic acid or acrylic acid salt and vinyl alcohol, and copolymers of maleic anhydride or maleic acid or fumaric acid and vinyl alcohol, polyethylene glycol, polyethylene oxide, polyvinylpyrrolidone, modified polyacrylic acid, oxidized starch, starch phosphate, casein, and various modified starches. These thickeners can be used singly or in combination of two or more types. Carboxymethylcellulose is preferred.

### -Dispersant -

The dispersant is not particularly limited, and polyvinylpyrrolidone and carboxymethylcellulose, which can also function as the above-mentioned thickener, a naphthalenesulfonic acid formaldehyde condensate and the like can be suitably used. These dispersants can be used singly or in a combination of two or more types. Carboxymethylcellulose is preferred.

### -Viscosity -

The viscosity of the slurry composition is preferably 50 mP-s or more, more preferably 100 mP·s or more, still more preferably 800 mP·s or more, and preferably 10,000 mP·s or less, more preferably 5,000 mP·s or less, still more preferably 3,000 mP·s or less.

When the viscosity of the slurry composition falls within the above range, it is possible to favorably allow the binder resin to migrate to the particle surface side while favorably limiting the migration of the carbon-based conductive material to the particle surface side, thereby allowing the electrochemical device to be obtained to exert better electrochemical characteristics while further improving the moldability of the composite particles.

The viscosity of the slurry composition can be appropriately adjusted for example by changing the amount of the solvent such as water in the slurry composition, and/or the type and/or the amount of the thickener.

### -Total solid concentration-

The total solid concentration of the slurry composition is preferably 45% by mass or more, more preferably 50% by mass or more, and is preferably 80% by mass or less, more preferably 70% by mass or less.

When the total solid content concentration of the slurry composition falls within the above range, the viscosity of the slurry composition can be easily adjusted.

### -Production method -

Methods for producing the slurry composition are not particularly limited. The slurry composition can be prepared for example by adding into the solvent the positive electrode active material, carbon-based conductive material, binder resin, and optional other components such as dispersants and thickeners, followed by mixing. The mixing method and the order of adding these components to the solvent are not particularly limited.

Mixers that can be used for mixing include ball mills, sand mills, beads mills, pigment dispersers, grinding machines, ultrasonic dispersers, homogenizers, homomixers, and planetary mixers. Mixing is preferably carried out at room temperature or higher and 80°C or below for 10 minutes or more and several hours or less.

From the viewpoint of uniformly dispersing the carbon-based conductive material in the composite particles, it is preferred to prepare a dispersion liquid (paste) containing the carbon-based conductive material in advance, and then mix the dispersion liquid with the positive electrode active material and other components to prepare the slurry composition. Methods for preparing the dispersion liquid containing the carbon-based conductive material (carbon-based conductive material dispersion liquid) are not particularly limited. The dispersion liquid can be obtained by adding the carbon-based conductive material and, optionally, the above-described dispersant to a solvent such as water to prepare a mixture and subjecting the obtained mixture to dispersing treatment using a disperser known in the art.

### <Classifying step>

The classifying step is a step wherein the composite particles obtained through the spray drying step are classified. Classification methods are not particularly limited. Classification methods that can be used herein include dry classification methods such as gravity classification, inertial classification, and centrifugal classification; wet classification methods such as sedimentation classification, machine classification, and hydraulic classification; sieving classification methods using a sieve net such as a vibrating sieve or an in-plane motion sieve; and the like can be employed. Sieving classification methods are preferred. By performing the classifying step, composite particles having a desired particle size can be easily obtained.

### (Electrochemical device positive electrode)

The presently disclosed electrochemical device positive electrode (hereinafter, also simply referred to as "positive electrode") includes at least a positive electrode mixed material layer and a current collector. Because the presently disclosed positive electrode includes a positive electrode mixed material layer that is formed using the presently disclosed composite particles described above, the positive electrode mixed material layer has good appearance and allow an electrochemical device to exert good electrochemical characteristics.

The presently disclosed positive electrode may be provided with a positive electrode mixed material layer only on one side of the current collector or may be provided with a positive electrode mixed material layer on both sides of the current collector. Further, the presently disclosed positive electrode may be provided with a layer other than the positive electrode mixed material layer and the current collector (hereinafter, simply referred to as "other layers") on the surface of the electrode (in particular, the surface on the positive electrode mixed material layer side).

### <Positive electrode mixed material layer>

As described above, the positive electrode mixed material layer is formed using the presently disclosed composite particles. That is, the positive electrode mixed material layer includes the positive electrode active material, the carbon-based conductive material, and the binder resin described above, and may optionally include other components such as the dispersants and thickeners described above.

Note that each component included in the positive electrode mixed material layer is included in the presently disclosed composite particles described above, and a suitable abundance ratio and a suitable attribute of each component in the positive electrode mixed material layer are the same as those of the corresponding component in the composite particles.

### <Current collector>

A material having electrical conductivity and electrochemical durability can be selected as the current collector in accordance with the type of the electrochemical device. For example, the current collector for a positive electrode for a lithium ion secondary battery can be a current collector made of iron, copper, aluminum, nickel, stainless steel, titanium, tantalum, gold, platinum, or the like. Aluminum foil is particularly preferred as the current collector used for the positive electrode. These materials may be used singly, or two or more of these materials may be used in combination in a freely selected ratio.

### <Other layers>

Other layers optionally provided on the surface of the positive electrode (in particular, the surface on the positive electrode mixed material layer side) are not particularly limited. Examples thereof include a known heatresistant layer provided for the purpose of improving heat resistance, and a known adhesive layer provided for the purpose of improving adhesion to other battery members such as separators.

### <Production method >

Methods for producing the presently disclosed positive electrode that comprises the above-described positive electrode mixed material layer are not particularly limited. The positive electrode can be produced for example by forming the presently disclosed composite particles into a sheet and laminating the obtained sheet onto a current collector. From the viewpoint of efficiently producing the positive electrode, it is preferred to employ a press molding method in which the composite particles are directly formed into a sheet on a current collector by pressing.

Press molding methods that can be used herein include a roll pressing method in which a roll press provided with a pair of rolls is used to form a positive electrode mixed material layer on a current collector by supplying the composite particles using a feeder such as a screw feeder while feeding the current collector using the rolls; and a molding method in which the composite particles are placed onto the current collector, spread with a blade or other tool to a certain thickness, and pressed. Of these methods, the roll pressing method is preferred.

### (Electrochemical device)

The presently disclosed electrochemical device is not particularly limited. For example, the electrochemical device is a secondary battery such as a lithium ion secondary battery; a primary battery such as a lithium battery or a lithium air battery; or a capacitor such as an electric double layer capacitor or a lithium ion capacitor. The electrode device is preferably a secondary battery (particularly, a lithium ion secondary battery). The presently disclosed electrochemical device includes the presently disclosed positive electrode described above. The presently disclosed electrochemical device therefore has good electrochemical characteristics.

Although the following describes as one example an embodiment in which the electrochemical device is a lithium ion secondary battery, the presently disclosed electrochemical device is not limited to the following example. A lithium ion secondary battery as the presently disclosed electrochemical device usually includes electrodes (positive and negative electrodes), an electrolyte solution, and a separator, wherein the presently disclosed positive electrode described above is used as the positive electrode.

### <Negative electrode>

Usually, the negative electrode includes a current collector and a negative electrode mixed material layer formed on the surface of the current collector. As the current collector of the negative electrode, for example, the same current collector as that of the positive electrode may be used. The current collector for the negative electrode is preferably a copper foil. In addition, a metal such as lithium or silicon or an alloy thereof may be used as the negative electrode without using a current collector. The negative electrode mixed material layer is not particularly limited. For example, any known negative electrode mixed material layers such as those described in JP2021-061256A can be used.

### <Electrolyte solution>

The electrolyte solution is normally an organic electrolyte solution obtained by dissolving a supporting electrolyte in an organic solvent. The supporting electrolyte may, for example, be a lithium salt. Examples of lithiumsalts include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Among them, LiPF₆, LiClO₄, CF₃SO₃Li are preferred, with LiPF₆ being particularly preferred because they are soluble in solvent and exhibit a higher degree of dissociation. One electrolyte may be used singly, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Suitable examples include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Mixed liquids of such solvents may also be used. Of these solvents, carbonates are preferred for their high dielectric constant and broad stable potential region, and a mixture of ethylene carbonate and ethyl methyl carbonate is more preferred.

The concentration of the electrolyte in the electrolyte solution can be adjusted as appropriate and may, for example, be preferably 0.5% by mass to 15% by mass, more preferably 2% by mass to 13% by mass, even more preferably 5% by mass to 10% by mass. Any additive known in the art may be added to the electrolyte solution, such as fluoroethylene carbonate or ethyl methyl sulfone.

### <Separator>

Examples of separators that can be used herein include, but not specifically limited to, those described in JP2012-204303A. Of these separators, microporous membrane made of polyolefinic resins (polyethylene, polypropylene, polybutene, or polyvinyl chloride) are preferred since such membranes can reduce the total thickness of the separator, thus increasing the ratio of the electrode active material in the lithium ion secondary battery and consequently increasing the capacity per volume.

### <Method for manufacturing lithium ion secondary battery>

The lithium ion secondary battery according to this disclosure may be produced, for example, by stacking a positive electrode and a negative electrode with a separator in-between, placing the resultant stack in a battery container after rolling or folding the stack in accordance with the battery shape as necessary, injecting an electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on Examples. However, the present disclosure is not limited to the following Examples. In the following description, "%" and "parts" used in expressing quantities are by mass, unless otherwise specified.

Various measurements and evaluations in Examples and Comparative Examples were made in accordance with the methods described below.

### <Ratio of amount of carbon atoms of center region to amount of carbon atoms of outer region in composite particle>

A cross-section of a composite particle was obtained using an ion milling machine (E-3500, manufactured by Hitachi High-Tech Corporation). An SEM/EDX analyzer (scanning electron microscope/energy dispersive X-ray spectroscopy; JSM-7800F manufactured by JEOL) was used to measure the amount of carbon atoms at an acceleration voltage of 15kV using an LED (lower detector).

Specifically, the amount of carbon atoms of the center region and the amount of carbon atoms of the outer region in a composite particle were measured with the procedure described above, and then the ratio of the amount of carbon atoms of the center region to the amount of carbon atoms of the outer region was determined by dividing the amount of carbon atoms of the center region by the amount of carbon atoms of the outer region.

The amount of carbon atoms of the center region: In a cross-sectional image of a composite particle, the center of a square whose one side is 15 µm was aligned with the center of a cross-section of the composite particle. The square was divided into 9 regions whose one side is 5 µm. The amount of carbon atoms in each region was measured, and the average value thereof was defined as the amount of carbon atoms in the center region.

The amount of carbon atoms of the outer region: In the cross-sectional image of the composite particle, the center of a square whose one side is 15 µm was aligned with the center of the cross-section of the composite particle, the square was moved vertically upward until at least one corner of the square contacts the outer edge of the cross-section of the composite particle, and the square was horizontally divided into three regions each having a size of 15 µm × 5 µm. In the same manner, in the cross-sectional image of the composite particle, the center of a square whose one side is 15 µm was aligned with the center of the cross-section of the composite particle, the square was moved vertically downward until at least one corner of the square contacts the outer edge of the cross-section of the composite particle, and the square was horizontally divided into three regions each having a size of 15 µm × 5 µm. Further, in the cross-sectional image of the composite particle, the center of a square whose one side is 15 µm was aligned with the center of the cross-section of the composite particle, the square was moved horizontally to the right until at least one corner of the square contacts the outer edge of the cross-section of the composite particle, and the square was vertically divided into three regions each having a size of 15 µm × 5 µm. In the same manner, in the cross-sectional image of the composite particle, the center of a square whose one side is 15 µm was aligned with the center of the cross-section of the composite particle, the square was moved horizontally to the left until at least one corner of the square contacts the outer edge of the cross-section of the composite particle, and the square was vertically divided into three regions each having a size of 15 µm × 5 µm. For a total of 12 regions thus obtained, the amount of carbon atoms of each region was measured, and the average value thereof was taken as the amount of carbon atoms of the outer region.

It should be noted that the measurement was made on a composite particle having a particle diameter (maximum diameter) of 40 µm or more and 100 µm or less measured in a cross-sectional image (SEM image) of the composite particle.

### <Average particle diameter of composite particles>

A particle size distribution (volume basis) of the composite particles was measured in accordance with JIS Z 8825:2013 using a dry laser diffraction/scattering particle size distribution analyzer (Microtrac MT-3200 II, manufactured by MicrotracBEL Corporation). Based on the obtained particle size distribution, the particle diameter (D50) where the cumulative volume became 50% from smaller diameters was calculated, and the calculated value was taken as the average particle diameter of the composite particles.

### <Average particle diameter of binder resin>

The average particle diameter of the binder resin was measured by laser diffraction using the aqueous binder resin dispersions prepared in Examples and Comparative Examples. Specifically, using the aqueous binder resin dispersion (adjusted to a solid content concentration of 0.1% by mass) as a sample, a particle size distribution (volume basis) was measured with a laser diffraction particle size distribution analyzer (LS-13 320, manufactured by Beckman Coulter Inc.). The particle diameter D50 where the cumulative volume calculated from smaller diameters became 50% in the particle size distribution was taken as the average particle size of the binder resin.

### <Particle size distribution of carbon-based conductive material>

The carbon-based conductive material dispersions prepared in Examples and Comparative Examples were measured for particle size distribution (volume basis) with a wet laser diffraction/scattering particle size distribution analyzer (Microtrac MT-3200 II, manufactured by MicrotracBEL Corporation). In the obtained particle size distribution, the particle diameter at the peak that appears first from smaller diameters (first particle diameter D1) and the particle diameter at the peak that appears second from smaller diameters (second particle diameter D2) were measured.

### <Viscosity of slurry composition>

The viscosity of the slurry compositions prepared in Examples and Comparative Examples was measured with a B-type viscometer at 25°C and 60 rpm.

### <Peel strength of electrode>

The lithium ion secondary battery positive electrode prepared in Examples and Comparative Examples were each cut into a rectangle having a length of 100 mm and a width of 10 mm to prepare a test piece. The surface of the positive electrode mixed material layer of the test piece was bonded to the surface of a SUS substrate using an adhesive cellophane tape (as defined in JISZ1522) with the surface having the positive electrode mixed material layer facing downward. A stress (N/m) when one end of the current collector was peeled off by vertically pulling it at a tensile rate of 50 mm/min was measured (note that the adhesive cellophane tape was fixed to the SUS substrate). The same measurement was made three times, and an average of the measurements was taken as the peel strength and evaluated based on the criteria given below. Larger values of peel strength indicate a stronger bond between the positive electrode mixed material layer and the current collector and better adhesion of the positive electrode (positive electrode mixed material layer).
A: Peel strength was 30 N/m or more
B: Peel strength was 20 N/m or more and less than 30 N/m
C: Peel strength was less than 20 N/m

### <Electrode resistance>

The lithium ion secondary battery positive electrode (basis weight: 25 g/cm², density: 2.4 g/cm³) prepared in Examples and Comparative Examples were measured for the resistance (unit: Ω·cm) of the positive electrode mixed material layer at 25°C using an electrode resistance measurement system (RM2610, manufactured by HIOKI E.E. Corporation).

### <Moldability (electrode appearance)>

A 10 cm × 10 cm area of the positive electrode mixed material layer of the lithium ion secondary battery positive electrodes prepared in Examples and Comparative Examples was visually observed to count the numbers of coating defects having a diameter of 0.5 mm or more. Evaluation criteria is given below. The smaller number of coating defects indicate better appearance of the positive electrode and better moldability of the composite particles.
A: No coating defects, with the positive electrode mixed material layer having a smooth surface
B: 1 or more and less than 5 coating defects
C: 5 or more and less than 10 coating defects
D: 10 or more coating defects

### <Rate characteristics>

The lithium ion secondary batteries prepared in Examples and Comparative Examples were left to stand at a temperature of 25°C for 5 hours after injection of an electrolyte solution. Next, the battery was charged to a cell voltage of 3.35V by the constant current method at a temperature of 25°C and at a rate of 0.2C and then subjected to aging treatment at a temperature of 60°C for 12 hours. The battery was then discharged to a cell voltage of 2.50V by the constant current method at a temperature of 25°C and a rate of 0.2C. Thereafter, CC-CV charging (upper limit cell voltage: 3.80V) was performed by the constant current method at 0.2C, and the battery was CC-discharged to 2.60V by the constant current method at 0.2C. This charging and discharging at 0.2C was repeated three times.

Next, in an environment of 25°C, the battery was charged to 3.80V by the constant current method at 0.1C and then discharged to 2.60V at 0.1C to find discharge capacity at 0.1C. Further, the battery was charged to 3.80V at 0.1C and then discharged to 2.60V at 1C to find discharge capacity at 1C. These measurements were made on 10 cells of the prepared lithium ion secondary battery and an average of each measurement was calculated to find discharge capacity "a" at 0.1C and discharge capacity "b" at 1C. The electric capacity ratio (= b/a × 100 (%)) was calculated and evaluated based on the criteria given below. Larger values of electric capacity ratio indicate better rate characteristics of the lithium ion secondary battery.
A: Electric capacity ratio was 90% or more
B: Electric capacity ratio was 80% or more and less than 90%
C: Electric capacity ratio was 70% or more and less than 80%
D: Electric capacity ratio was less than 70%

### <Cycle characteristics>

The lithium ion secondary batteries prepared in Examples and Comparative Examples were left to stand at a temperature of 25°C for 5 hours after injection of an electrolyte solution. Next, the battery was charged to a cell voltage of 3.35V by the constant current method at a temperature of 25°C and at a rate of 0.2C and then subjected to aging treatment at a temperature of 60°C for 12 hours. The battery was discharged to a cell voltage of 2.50V by the constant current method at a temperature of 25°C and at a rate of 0.2C. Thereafter, CC-CV charging (upper limit cell voltage: 4.20V) was performed by the constant current method at 0.2C, and the battery was CC-discharged to 3.00V by the constant current method at 0.2C. This charging and discharging at 0.2C was repeated three times.

Next, in an environment of 45°C, 100 cycles of charging and discharging were performed at a cell voltage of 3.80-2.60V and a charging/discharging rate of 0.5C. The discharge capacity of the 1st cycle was defined as X1 and the discharge capacity of the 100th cycle was defined as X2. Using the discharge capacity X1 and the discharge capacity X2, the capacity retention ratio (= (X2/X1) × 100(%)) was calculated and evaluated based on the criteria given below. Larger values of capacity retention ratio indicate better cycle characteristics of the lithium ion secondary battery.
A: Capacity retention ratio was 90% or more
B: Capacity retention ratio was 85% or more and less than 90%
C: Capacity retention ratio was 80% or more and less than 85%
D: Capacity retention ratio was less than 80%

### (Example 1)

### (Production of binder resin)

To a polymerization can A were added 10.75 parts of 2-ethylhexyl acrylate as a (meth)acrylic acid ester monomer, 1.25 parts of acrylonitrile as a nitrile group-containing monomer, 0.12 parts of sodium lauryl sulfate, and 79 parts of ion-exchanged water, and 0.2 parts of ammonium persulfate as a polymerization initiator and 10 parts of ion-exchanged water were also added. The obtained mixture was heated to 60°C and stirred for 90 minutes. Thereafter, 67 parts of 2-ethylhexyl acrylate as a (meth)acrylic acid ester monomer, 19 parts of acrylonitrile as a nitrile group-containing monomer, 2.0 parts of methacrylic acid as an acidic group-containing monomer, 0.7 parts of sodium lauryl sulfate, and 46 parts of ion-exchanged water were added to another polymerization can B, and the mixture was stirred to prepare an emulsion. The emulsion was sequentially added from the polymerization can B to the polymerization can A over a period of about 180 minutes. The mixture was then stirred for about 120 minutes and cooled when the monomer consumption rate became 95% to terminate the reaction to afford an aqueous dispersion containing a binder resin (aqueous binder resin dispersion). The obtained binder resin was particulate and had an average particle diameter of 230 nm.

### (Preparation of carbon-based conductive material dispersion)

200 parts of carbon black (Super C65, manufactured by TIMCAL Ltd.) and 100 parts of multi-walled carbon nanotubes (BET specific surface area: 200 m²/g) as carbon-based conductive materials, 30 parts (in terms of solid content) of an 8% aqueous solution of carboxymethylcellulose (Daicel 2220, manufactured by Daicel Corporation) as a dispersant, and 6225 parts of water as a solvent were stirred using a disper blade (3000 rpm, 10 minutes). A bead mill (LMZ015, manufactured by Ashizawa Finetech Ltd.) with 1 mm-diameter zirconia beads was then used to mix the mixture at a circumferential speed of 8 m/s for 1 hour to prepare a carbon-based conductive material dispersion. The particle size distribution was measured using the obtained carbon-based conductive material dispersion.

### (Production of slurry composition>

97.0 parts of LiFePO₄ as a positive electrode active material, 0.28 parts (in terms solids) of a 1% aqueous solution of carboxymethylcellulose (Daicel 2200, manufactured by Daicel Corporation) as a thickener, 1.32 parts (in terms of solid content) of the carbon-based conductive material dispersion prepared above, and 1.4 parts (in terms of solid content) of the aqueous binder resin dispersion prepared above were mixed, and further ion-exchanged water was added so that the resulting slurry composition had a viscosity of 1,500 mPa-s, and the mixture was mixed with a disper blade to prepare a slurry composition. The total solid concentration of the slurry composition was 61% by mass.

### (Production of Composite Particles)

The slurry composition was spray-dried using a spray dryer (manufactured by Ohkawara Kakoki Co., Ltd.) to produce composite particles. The average particle diameter of the obtained composite particles was 70 µm.

### <Production of lithium ion secondary battery positive electrode>

The prepared composite particles were supplied to press rolls (roll temperature: 100°C, press linear pressure: 500 kN/m) of a roll press machine (push-cut rough surface hot roll, manufactured by Hirano Gikekogyo, Co., Ltd.) using a quantitative feeder (Nikka Spray K-V, manufactured by Nikka, Ltd.). An aluminum foil having a thickness of 20µm was inserted between the press rolls to allow the composite particles supplied from the quantitative feeder to be deposited on the aluminum foil, and the composite particles were pressed at a rate of 1.5m/min to produce a lithium ion secondary battery positive electrode web having a positive electrode active material layer having a basis weight of 25 mg/cm². The web was rolled by a roll press to produce a sheet of a positive electrode composed of a positive electrode mixed material layer having a density of 2.4g/cm³ an aluminum foil. The positive electrode was used to measure moldability, peel strength and electrode resistance. The results are shown in Table 1.

### <Production of negative electrode for lithium ion secondary battery>

33 parts of 1,3-butadiene as an aliphatic conjugated diene monomer, 3.5 parts of itaconic acid as an acidic group-containing monomer, 63.5 parts of styrene as an aromatic vinyl monomer, 0.4 parts of sodium dodecylbenzenesulfonate as an emulsifying agent, 150 parts of ion-exchanged water, and 0.5 parts of potassium persulfate as a polymerization initiator were charged into a 5MPa pressure-resistant vessel equipped with a stirrer, and after sufficiently stirring, the mixture was heated to 50°C to start polymerization. The polymerization reaction was terminated by cooling once the polymerization conversion rate reached 96% to yield a mixture containing a particulate binder resin (styrene-butadiene copolymer). A 5% aqueous sodium hydroxide solution was added to the mixture to adjust pH8, and the unreacted monomers were removed by vacuum distillation under heating. Thereafter, the mixture was cooled to 30°C or lower to obtain an aqueous dispersion containing a negative electrode resin.

Next, 48.75 parts of artificial graphite as a negative electrode active material, 48.75 parts of natural graphite, and 1 part of carboxymethylcellulose as a thickener were charged into a planetary mixer. Further, the mixture was diluted with ion-exchanged water so as to have a solid content of 60%, and then kneaded at a rotational speed of 45 rpm for 60 minutes. Thereafter, 1.5 parts (in terms of solid content) of the aqueous dispersion containing a negative electrode resin obtained above was charged into the mixer and kneaded at a rotational speed of 40 rpm for 40 minutes. Ion-exchanged water was added so that the mixture has a viscosity became 3000±500 mPa·s (B-type viscometer, 60 rpm, 25°C) to prepare a slurry for a negative electrode mixed material layer.

Next, a copper foil having a thickness of 15 µm was prepared as a current collector. The slurry for a negative electrode mixed material layer was applied to the copper foil so that the coating weight after drying became 13 mg/cm² and dried at 60°C for 20 minutes and then at 120°C for 20 minutes. Thereafter, heat treatment was performed at 150°C for 2 hours to produce a negative electrode web. The negative electrode web was rolled by a roll press to produce a sheet of a negative electrode composed of a negative electrode mixed material layer having a density of 1.6 g/cm³ (on both surfaces) and a copper foil.

### <Manufacture of lithium ion secondary battery>

A single-layer laminated cell (corresponding to the discharging capacity of 250 mAh) was prepared using the positive electrode, the negative electrode, and a separator (made of polyethylene, thickness: 12 µm), and placed in an aluminum packaging material. Thereafter, the aluminum packaging material was filled with 1.0M LiPF₆ solution (solvent = 3:7 (volume ratio) mixed solvent of ethylene carbonate (EC) and diethyl carbonate DEC with 2 vol% (with respect to solvent) of vinylene carbonate as an additive) as an electrolyte solution. Further, in order to seal the opening of the aluminum packaging material, the aluminum packaging material was closed by heat sealing at a temperature of 150°C. In this way a lithium ion secondary battery was manufactured. Cycle characteristics and rate characteristics were evaluated using this lithium ion secondary battery. The results are shown in Table 1.

### (Examples 2 and 3)

A positive electrode, a negative electrode, and a separator were prepared in the same manner as in Example 1 to manufacture a lithium ion secondary battery except that the viscosity of the slurry composition was changed as shown in Table 1 in the production of the composite particles. Then, various measurements and evaluations were made. The results are shown in Table 1.

### (Example 4)

A positive electrode, a negative electrode, and a separator were prepared in the same manner as in Example 2 to manufacture a lithium ion secondary battery except that the blending amounts of the positive electrode active material, the thickener, and the dispersant, as well as the first particle diameter D1 and the second particle diameter D2 of the carbon-based conductive material were changed as shown in Table 1 in the production of the composite particles. Then, various measurements and evaluations were made. The results are shown in Table 1.

### (Examples 5 and 6)

A positive electrode, a negative electrode, and a separator were prepared in the same manner as in Example 2 to manufacture a lithium ion secondary battery except that the blending amount of the carbon-based conductive material as well as the first particle diameter D1 and/or the second particle diameter D2 of the carbon-based conductive material were changed as shown in Table 1 in the production of the composite particles. Then, various measurements and evaluations were performed. The results are shown in Table 1.

### (Example 7)

A positive electrode, a negative electrode, and a separator were prepared in the same manner as in Example 2 to manufacture a lithium ion secondary battery except that the blending amount of the positive electrode active material, the type and the blending amount of the dispersant, as well as the first particle diameter D1 and the second particle diameter D2 of the carbon-based conductive material were changed as shown in Table 1 in the production of the composite particles. Then, various measurements and evaluations were made. The results are shown in Table 1.

### (Example 8)

A positive electrode, a negative electrode, and a separator were prepared in the same manner as in Example 2 to manufacture a lithium ion secondary battery except that the blending amount of the carbon-based conductive material and the type of the dispersant, as well as the first particle diameter D1 and the second particle diameter D2 of the carbon-based conductive material were changed as shown in Table 1 in the production of the composite particles. Then, various measurements and evaluations were made. The results are shown in Table 1.

### (Example 9)

A positive electrode, a negative electrode, and a separator were prepared in the same manner as in Example 2 to manufacture a lithium ion secondary battery except that the type and the blending amount of the carbon-based conductive material as well as the second particle diameter D2 of the carbon-based conductive material were changed as shown in Table 1 in the production of the composite particles. Then, various measurements and evaluations were made. The results are shown in Table 1.

### (Comparative Example 1)

A positive electrode, a negative electrode, and a separator were prepared in the same manner as in Example 4 to manufacture a lithium ion secondary battery except that the blending amount of the positive electrode active material and the viscosity of the slurry composition were changed as shown in Table 1 and the thickener was not added. Then, various measurements and evaluations were made. The results are shown in Table 1.

### (Comparative Example 2)

A positive electrode, a negative electrode, and a separator were prepared in the same manner as in Example 2 to manufacture a lithium ion secondary battery except that the blending amount of the positive electrode active material, the blending amount of the dispersant and the viscosity of the slurry composition, as well as the first particle diameter D1 of the carbon-based conductive material were changed as shown in Table 1 in the production of the composite particles. Then, various measurements and evaluations were made. The results are shown in Table 1.

### (Comparative Example 3)

A positive electrode, a negative electrode, and a separator were prepared in the same manner as in Example 7 to manufacture a lithium ion secondary battery except that the first particle diameter D1 and the second particle diameter D2 of the carbon-based conductive material were changed as shown in Table 1 by dispersing the carbon-based conductive material using only a disper blade at the time of preparing the carbon-based conductive material dispersion in the production of the composite particles. Then, various measurements and evaluations were made. The results are shown in Table 1.

**[Table 1]**

| | | | | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 |
|---|---|---|---|---|---|---|---|---|---|---|---|---|---|---|---|
| | Positive electrode active material | LiFePO₄ | | 97.00 | 9700 | 97.00 | 97.25 | 9700 | 9700 | 96.96 | 97.00 | 97.00 | 97.30 | 94.12 | 96.96 |
| | Binder resin | Blending amount (solid content) | | 1.40 | 1.40 | 1.40 | 1.40 | 1.40 | 1.40 | 1.40 | 1.40 | 1.40 | 1.40 | 1.40 | 1.40 |
| | | Average particle diameter (rnn) | | r 230 | 230 | 230 | 230 | 230 | 230 | 230 | 230 | 230 | 230 | 230 | 230 |
| | Carbon-based conductive material | Carbon black | Super C65 | 0.80 | 0.80 | 0.80 | 0.80 | 1.10 | 0.10 | 0.80 | 0.10 | 0.80 | 0.80 | 0.80 | 0.80 |
| | | | Ketjen black | - | - | - | - | - | - | - | - | 0.40 | - | - | - |
| | | Carbon nanotubes | | 0.40 | 0.40 | 0.40 | 0.40 | 0.10 | 1.10 | 0.40 | 1.10 | - | 0.40 | 0.40 | 0.40 |
| | | First particle diameter D1 (µm) | | 0.5 | 0.5 | 0.5 | 0.7 | 1.0 | 0.5 | 0.9 | 0.4 | 0.5 | 0.7 | 0.7 | 30 |
| Composite particles | | Second particle diameter D2 (µm) | | 6.5 | 6.5 | 6.5 | 8.0 | 70 | 200 | 10.0 | 4.0 | 120 | 8.0 | 6.5 | 500 |
| | Dispersant | Naphthalenesulfonic acid formaldehyde condensate (solid content) | | - | - | - | - | - | - | 0.16 | - | - | - | - | 0.16 |
| | | Carboxymethylcellulose (solid content) | | 0.12 | 0.12 | 0.12 | 0.10 | 0.12 | 0.12 | - | - | 0.12 | 0.10 | 300 | - |
| | | Polyvinylpyrrolidone (solid content) | | - | - | - | - | - | - | - | 0.12 | - | - | - | - |
| | Thickener | Carboxymethylcellulose (solid content) | | 0.28 | 0.28 | 0.28 | 0.05 | 0.28 | 0.28 | 0.28 | 0.28 | 0.28 | - | 0.28 | 0.28 |
| | Average particle diameter (µm) | | | 70 | 65 | 55 | 60 | 65 | 65 | 66 | 65 | 65 | 55 | 45 | 65 |
| | Amount of carbon atoms of center region / amount of carbon atoms of outer region | | | 0.95 | 0.90 | 0.70 | 0.82 | 0.75 | 0.40 | 0.75 | 0.92 | 0.65 | 0.20 | 120 | 0.25 |
| Slurry composition | viscosity (mPa·s) | | | 1,500 | 800 | 100 | 500 | 800 | 800 | 800 | 800 | 800 | 40 | 11,000 | 800 |
| | Total solid concentration (% by mass) | | | 61 | 50 | 45 | 55 | 50 | 50 | 50 | 50 | 50 | 45 | 50 | 50 |
| Evaluations | Peel strength of electrode (N/m) | | | A | A | B | A | A | A | A | A | A | C | C | B |
| | Electrode resistance (Ω·cm) | | | 5 | 7 | 10 | 8 | 9 | 15 | 11 | 6 | 12 | 30 | 25 | 27 |
| | Moldability (electrode appearance) | | | A | A | A | A | A | A | A | A | A | A | D | A |
| | Rate characteristics | | | A | A | A | A | A | B | B | A | B | D | C | D |
| | Cycle characteristics | | | A | A | B | A | B | B | B | A | B | D | C | D |

It can be seen from Table 1 that the electrochemical characteristics of the electrochemical device were good in Examples 1 to 9 in which the ratio of the amount of carbon atoms of the center region to the amount of carbon atoms of the outer region (amount of carbon atoms of the center region/amount of carbon atoms of the outer region) in the composite particle is in the range of 0.3 or more and 1.0 or less.

### INDUSTRIAL APPLICABILITY

According to the present disclosure, it is possible to provide composite particles for an electrochemical device positive electrode that are capable of allowing an electrochemical device to exert good electrochemical characteristics, and a method for producing the same.

Further, according to the present disclosure, it is possible to provide an electrochemical device positive electrode capable of allowing an electrochemical device to exert good electrochemical characteristics, and an electrochemical device having good electrochemical characteristics.

## Claims

1. Composite particles for an electrochemical device positive electrode, comprising a positive electrode active material, a carbon-based conductive material, and a binder resin,
wherein a ratio of an amount of carbon atoms of a center region to an amount of carbon atoms of an outer region (amount of carbon atoms of center region / amount of carbon atoms of outer region) in the composite particle as measured in accordance with the following measurement method is 0.3 or more and 1.0 or less:
[Measurement method]
(1) In a cross-sectional image of a composite particle, the center of a square whose one side is 15 µm is aligned with the center of a cross-section of the composite particle; the square is divided into 9 regions whose one side is 5 µm; an amount of carbon atoms in each region is measured; and an average value thereof is defined as the amount of carbon atoms in the center region;
(2) in the cross-sectional image of the composite particle, the center of a square whose one side is 15 µm is aligned with the center of the cross-section of the composite particle; the square is moved from the center in each of the four directions of right, up, left and down of the cross-sectional image until the square contacts an outer edge of the cross-section of the composite particle; each square is divided into three regions each having a size of 15 µm × 5 µm to produce a total of 12 regions; an amount of carbon atoms of each region is measured; and an average value thereof is defined as the amount of carbon atoms of the outer region; and
(3) the amount of carbon atoms of the center region is divided by the amount of carbon atoms of the outer region.

2. The composite particles for an electrochemical device positive electrode according to claim 1, wherein a particle size distribution of the carbon-based conductive material has a plurality of peaks.

3. A method for producing the composite particles for an electrochemical device positive electrode according to claim 1 or 2, the method comprising spray-drying a slurry composition containing a positive electrode active material, a carbon-based conductive material, a binder resin, and a solvent.

4. The method for producing the composite particles for an electrochemical device positive electrode according to claim 3, wherein a viscosity of the slurry composition is 50 mP·s or more.

5. An electrochemical device positive electrode comprising a current collector, and a positive electrode mixed material layer formed on the current collector,
wherein the positive electrode mixed material layer is formed using the composite particles for an electrochemical device positive electrode according to claim 1 or 2.

6. An electrochemical device comprising the electrochemical device positive electrode according to claim 5.
